# EUROPÄISCHE PATENTANMELDUNG

(11) **EP 0 986 236 A2**
(43) Veröffentlichungstag der Anmeldung: **15.03.2000**
(21) Anmeldenummer: 99440237.8
(22) Anmeldetag: 27.08.1999
(51) Int. Cl.: H04M 3/42

(54) **Dienststeuerplattform**

(30) Priorität: 05.09.1998 DE 19840634
(71) Anmelder: ALCATEL, 75008 Paris (FR)
(72) Erfinder: Lautenschlager, Wolfgang, 71287 Weissach-Flacht (DE); Rupp, Stephan, 74354 Besigheim (DE); Feil, Franz, 89081 Ulm (DE); Lehmacher, Markus, 70435 Stuttgart (DE); Hintzen, Heinrich, 70439 Stuttgart (DE)
(74) Vertreter: Zinsinger, Norbert

(57) **Zusammenfassung**

Die Erfindung betrifft ein Verfahren zum Bereitstellen von Diensten in einem Telekommunikationsnetz (TKN) sowie einen Dienst-Interaktions-Verwalter (SIM) und eine Dienststeuerplattform (MSP) zur Durchführung des Verfahrens. Die Dienststeuerplattform (MSP) weist einen Dienst-Interaktions-Verwalter (SIM) und ein oder mehrere Dienststeuereinheiten (SCP1 bis SCP3) auf. Beim Aufbau einer Verbindung, für die ein oder mehrere Dienste zu erbringen sind, wird eine Dienstvermittlungsfunktion (SSF) einer Dienstvermittlungsstelle (SSP1) getriggert und die hierbei erzeugte Dienstanforderungsnachricht wird an den Dienst-Interaktions-Verwalter (SIM) geleitet. Dieser ermittelt, wenn er für eine Verbindung einmal durch den Empfang einer Dienstanforderungsnachricht aktiviert worden ist, sämtliche Dienste, die für die Verbindung zu erbringen sind. Weiter steuert er die Ausführung sämtlicher für die Verbindung ermittelter Dienste, indem er an die den ermittelten Diensten zugeordneten Dienststeuereinheiten (SCP1, SCP2) Dienstanforderungsnachrichten sendet, die die Ausführung der den ermittelten Diensten zugeordneten jeweiligen dienstspezifischen Dienstlogika (SL1, SL2) für die Verbindung aktivieren, wobei die aktivierten Dienstlogika (SL1, SL2) zur Steuerung der Erbringung des jeweiligen Dienstes mit dem Dienst-lnteraktions-Verwalter (SIM) interagieren.

## Beschreibung

Die Erfindung betrifft ein Verfahren zum Bereitstellen von Diensten in einem Telekommunikationsnetz nach dem Oberbegriff von Anspruch 1, einen Dienst-Interaktions-Verwalter zur Unterstützung der Bereitstellung von Diensten nach dem Oberbegriff von Anspruch 11 und eine Dienststeuerplattform zur der Bereitstellung von Diensten nach dem Oberbegriff von Anspruch 12.

Die Erfindung geht von der Erbringung von Diensten gemäß der IN-Architektur (IN = Intelligent Network) aus, wie sie beispielsweise in dem Artikel ,,Produkte für intelligente Netze", Elektrisches Nachrichtenwesen, Band 63, Nummer 4, 1989, Seite 321 bis 330 von J.-P. Euzen und J. B. Kérihuel beschrieben ist.

Ein Telekommunikationsnetz verfügt über mehrere Dienstvermittlungsstellen, die über das Signalisierungssystem Nr. 7 mit mehreren Dienststeuereinheiten verbunden sind. Die Dienstvermittlungsstellen erkennen Trigger-Ereignisse, die anzeigen, daß ein rufender Teilnehmer den Zugang zu einem IN-Dienst benötigt. Erkennt nun eine Dienstvermittlungsstelle bei einem Verbindungsaufbau, an dem sie beteiligt ist, ein solches Trigger-Ereignis, so sendet sie eine Dienstanforderungsnachricht an diejenige Dienststeuereinheit, die über eine Dienstelogik für den benötigten IN Dienst verfügt. Die Dienstlogik stellt ein Steuerprogramm dar, das, sobald es durch die Dienstanforderungsnachricht aktiviert wird, die Ausführung des benötigten IN-Dienstes steuert. Für die Erbringung des benötigten IN Dienstes interagiert hierbei im Folgenden die aktivierte Dienstlogik der Dienststeuereinheit mit der Dienstvermittlungsstelle. Ist der benötigte IN Dienst erbracht, so wird der Dialog zwischen Dienstvermittlungsstelle und Dienststeuereinheit sowie die Ausführung des Dienstlogikprogramms beendet.

Es kann auch der Fall eintreten, daß mehrere IN Dienste für eine Verbindung zu erbringen sind. In diesem Fall wird für jeden dieser IN Dienste die oben beschriebene Prozedur durchgeführt: Die für die Verbindung zu erbringenden IN Dienste werden sequentiell hintereinander in voneinander getrennten Schritten erbracht. Es wird jeweils ein Trigger-Ereignis von einer Dienstvermittlungsstelle erkannt und daraufhin ein entsprechender dienstspezifischer Dialog zwischen der jeweiligen Dienstvermittlungsstelle und einer Dienststeuereinheit initiiert und beendet. Es ist hierbei in der Regel der Fall, daß die für eine Verbindung zu erbringenden IN Dienste von unterschiedlichen Dienstvermittlungsstellen erkannt und ihre Bearbeitung initiiert wird.

Der Erfindung liegt nun die Aufgabe zugrunde, die Erbringung von Diensten in Telekommunikationsnetzen zu verbessern.

Diese Aufgabe wird gelöst durch ein Verfahren zum Bereitstellen von Diensten in einem Telekommunikationsnetz nach der Lehre von Anspruch 1, einen Dienst-Interaktions-Verwalter zur Unterstützung der Bereitstellung von Diensten nach der Lehre von Anspruch 11, und einer Dienststeuerplattform nach der Lehre von Anspruch 12.

Der Erfindung liegt hierbei der Gedanke zugrunde, eine von einem Dienst-lnteraktions-verwalter erbrachte Dienst-Interaktions-Funktion zwischen den von den Dienstvermittlungsstellen erbrachten Dienstvermittlungsfunktionen und den von den Dienststeuereinheiten erbrachten Dienststeuerfunktionen einzuführen. Sobald eine Dienstvermittlungsstelle die Ausführung eines Dienstes für eine Verbindung triggert, veranlaßt die Dienst-lnteraktions-Funktion automatisch die Ausführung aller anderen Dienste, die für diese Verbindung zu erbringen sind und verwaltet weiter zentral das Ausführen aller dieser für die Verbindung zu erbringenden Dienste.

Der Vorteil der Erfindung besteht darin, daß hierdurch komplexe Dienst-Szenarien mit verschiedenen, hintereinander oder parallel auszuführenden und voneinander abhängigen Diensten möglich werden.

Weiter ist pro Verbindung zur Diensterbringung immer nur ein Dialog zwischen der von dem Dienst-Interaktions-Verwalter und den Dienststeuereinheiten gebildeten Dienststeuerplattform und einer Dienstvermittlungsstelle notwendig. Die zwischen Dienstvermittlungsstellen und Dienststeuerplattform auszutauschenden Datenmengen werden dadurch erheblich reduziert. Dadurch wird unter anderem die Diensterbringungszeit und auch die Verbindungsaufbauzeit erheblich reduziert.

Wenn die Verbindungen zwischen Dienstvermittlungsstellen und Dienststeuerplattform über das Signalisierungsystem geführt werden, ergibt sich weiter eine Entlastung des (meist schmalbandigen) Signalisierungssystems.

Vorteilhafte Ausgestaltungen der Erfindung sind den Unteransprüchen zu entnehmen.

Es ist hierbei vor allem vorteilhaft, daß der Dienst-Interaktions-Verwalter das parallele Ausführen von Diensten für eine Verbindung initiiert und koordiniert. Hierdurch wird die Diensterbringungszeit weiter reduziert. Weitere Vorteile ergeben sich in diesem Zusammenhang durch eine dynamische an die Art der ermittelten Dienste angepaßte sequentielle oder parallele Steuerung der Dienstausführung.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild einer Kommunikationsumgebung mit einem Telekommunikationsnetz und einer erfindungsgemäßen Dienststeuerplattform.
- Fig. 2: zeigt ein detaillierteres Blockschaltbild eines Ausschnittes aus der Kommunikationsumgebung nach Fig. 1.
- Fig. 3: zeigt eine funktionelle Darstellung eines erfindungsgemäßen Dienst-Interaktions-Verwalters.

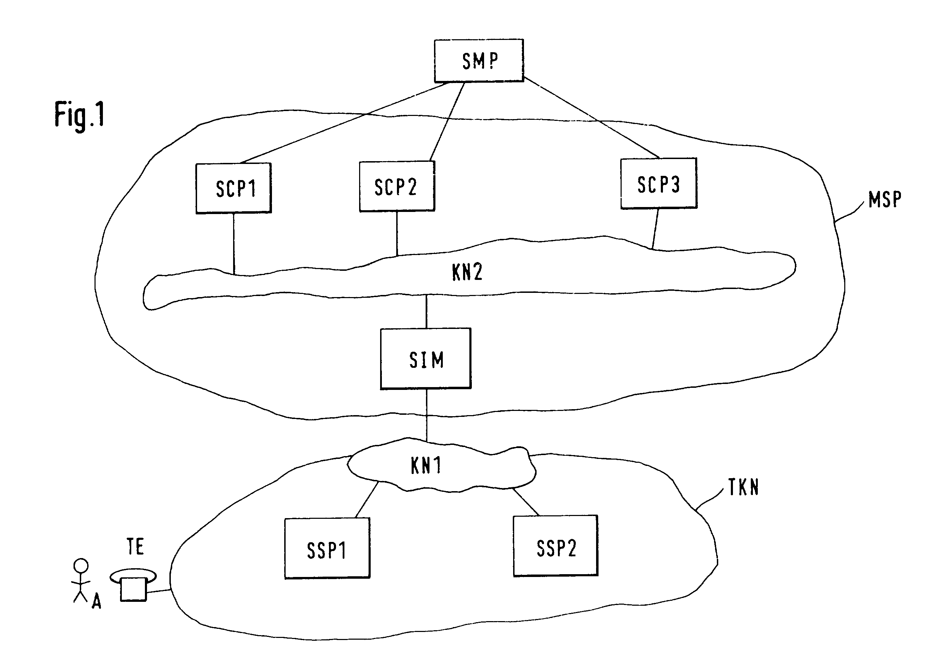

Fig. 1 zeigt eine Dienstmanagementeinheit SMP, eine Dienststeuerplattform MSP und ein Telekommunikationsnetz TKN. Von den mit dem Telekommunikationsnetz TKN verbundenen Endgeräten ist beispielhaft ein Endgerät TE eines Teilnehmers A gezeigt.

Bei dem Telekommunikationsnetz TKN handelt es sich um ein übliches Fernsprechnetz. Es ist jedoch auch möglich, daß das Telekommunikationsnetz TKN auch der Daten- oder Videoübertragung dient. Das Telekommunikationsnetz TKN kann auch aus mehreren miteinander verbundenen Teil netzen bestehen, die auch unterschiedlichen Netzbetreibern zugeordnet sein können. Bei solchen Teilnetzen kann es sich weiter auch um Mobilfunknetze handeln.

Das Telekommunikationsnetz TKN wird von einer Vielzahl miteinander verbundenen Vermittlungsstellen gebildet, von denen in Fig. 1 beispielhaft zwei speziell ausgestaltetet Vermittlungsstellen, zwei Dienstvermittlungsstellen SSP1 und SSP2 gezeigt sind. Weiter weist das Telekommunikationsnetz TKN ein Kommunikationsnetze KN1 auf, das die Dienstvermittlungsstellen SSP1 und SSP2 mit der Dienststeuerplattform MSP verbindet.

Bei den Dienstvermittlungsstellen SSP1 und SSP2 handelt es sich um Dienstvermittlungsstellen gemäß der IN Architektur. Die Zahl der Dienstvermittlungsstellen SSP1 und SSP2 ist beispielhaft gewählt, es muß jedoch zumindest eine solche Vermittlungsstelle im Telekommunikationsnetz TKN vorhanden sein.

Bei dem Kommunikationsnetz KN1 handelt es sich um das Signalisierungsnetz, das die Signalisierung zwischen den Vermittlungsstellen des Telekommunikationsnetzes TKN ermöglicht. Das Kommunikationsnetz KN1 wird somit beispielsweise von einem Nr. 7 Signalisierungsnetz gebildet. Es ist auch möglich, daß es sich bei dem Kommunikationsnetz KN1 um ein breitbandiges Datennetz, beispielsweise ein ATM- oder DQDB Datennetze (ATM = Asynchronous Transfer Mode, DQDB = Distributed Queue Dual Bus) handelt.

Die Dienststeuerplattform MSP steuert die Erbringung von Diensten für Verbindungen des Telekommunikationsnetzes TKN. Die Dienststeuerplattform MSP weist einen Dienst-Interaktions-Verwalter SIM, ein Kommunikationsnetz KN2 und ein oder mehrere Dienststeuereinheiten auf, von denen in Fig. 1 beispielhaft drei Dienststeuereinheiten SCP1 bis SCP3 gezeigt sind. Die Dienststeuereinheiten SCP1 bis SCP3 und der Dienst-Interaktions-Verwalter SIM werden jeweils von miteinander über das Kommunikationsnetze KN2 verbundenen Rechnerplattformen gebildet, auf denen Applikationen zur Erfüllung der jeweiligen Funktion aufsetzen. Es ist auch möglich, daß die Dienststeuereinheiten SCP1 bis SCP3 und der Dienst-Interaktions-Verwalter SIM virtuelle Maschinen darstellen, die auf ein oder mehrere miteinander verbundene Server-Rechner verteilt sind.

Die Dienststeuerplattform MSP mit den Dienststeuereinheiten SCP1 bis SCP3 ist einem Netzbetreiber zugeordnet. Es ist aber auch möglich, daß die Dienststeuerplattform MSP einem unabhängigen Dienstbetreiber zugeordnet ist. Weiter ist es möglich, daß die Dienststeuereinheiten SCP1 bis SCP3 der Dienststeuerplafform MSP verschiedenen Netzbetreibern zugeordnet sind. Somit ist es auch möglich, daß der Dienst-Interaktions-Verwalter SIM auf Dienststeuereinheiten eines fremden Netzbetreibers oder Dienstbetreibers zugreift.

Bei dem Kommunikationsnetz KN2 handelt es sich um ein Rechnernetz, das der Verknüpfung von Rechnerplattformen dient. Es handelt sich bei dem Kommunikationsnetz KN2 somit beispielsweise um ein breitbandiges Datennetz, beispielsweise um ein LAN (Local Area Network). Es ist jedoch auch möglich, daß es sich bei dem Kommunikationsnetz KN2 um das Signalisierungsnetz des Telekommunikationsnetzes TKN handelt.

Verschiedene Dienststeuereinheiten können auch über unterschiedliche Kommunikationsnetze mit dem Dienst-Interaktions-Verwalter SIM verbunden sein. So ist es beispielsweise vorteilhaft, wenn der Dienst-Interaktions-Verwalter SIM mit einer Dienststeuereinheit, die einem anderen Netzbetreiber zugeordnet ist, über das Signalisierungsnetz kommuniziert. Diese Kommunikation würde dann über das Signalisierungsnetz des eigenen Netzbetreibers über einen Netzübergang in das Signalisierungsnetz des anderen Netzbetreibers geführt.

Die Dienstmanagementeinheit SMP dient der Verwaltung der von der Dienststeuerplattform MSP bereitgestellten Dienste und wird beispielsweise von einer Dienstmanagementeinheit gemäß der IN Architektur gebildet.

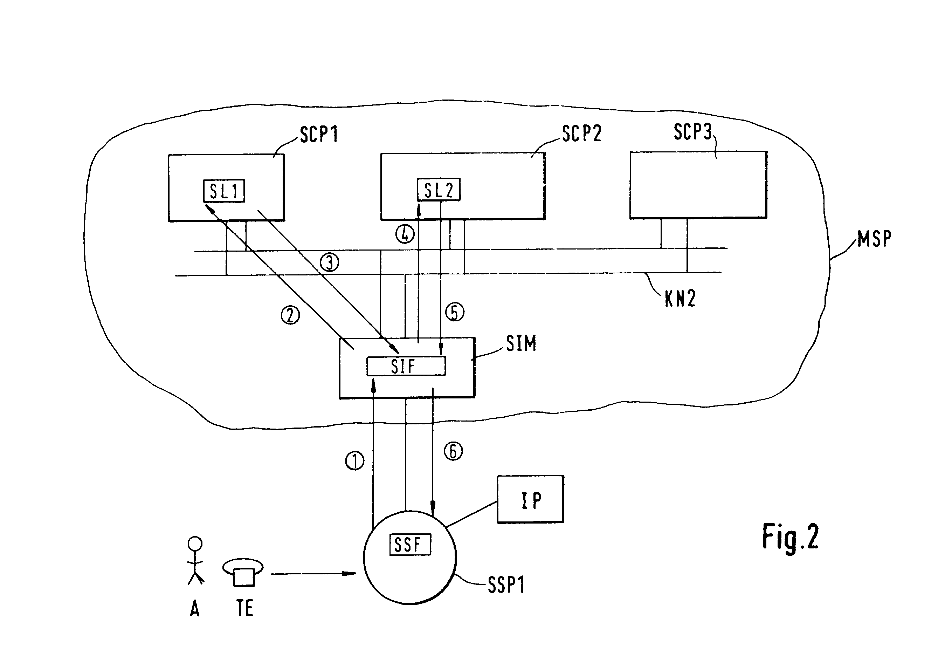

Anhand von Fig. 2 wird nun der Aufbau der Dienststeuerplattform MSP sowie der Ablauf des erfindungsgemäßen Verfahrens detaillierter erläutert.

Fig. 2 zeigt das Endgerät TE mit dem Teilnehmer A, die Dienstvermittlungsstelle SSP1 mit einem Dienstunterstützungssystem IP, und die Dienststeuerplattform MSP mit den Dienststeuereinheiten SCP1 bis SCP3, dem Kommunikationsnetz KN2 und dem Dienst-Interaktions-Verwalter SIM.

Die Dienststeuereinheiten SCP1 bis SCP3 weisen jeweils ein oder mehrere Dienstlogika auf, von denen beispielhaft eine Dienstlogik SL1 der Dienststeuereinheit SCP1 und eine Dienstlogik SL2 der Dienststeuereinheit SCP2 gezeigt sind.

Die Dienstlogika SL1 und SL2 stellen jeweils ein Dienststeuerprogramm dar, das die Steuerung der Erbringung eines speziellen Dienstes beschreibt. Die Dienstlogik SL1 steuert die Erbringung eines ersten Dienstes und die Dienstlogik SL2 steuert die Erbringung eines von diesem verschiedenen zweiten Dienstes. Wird die Ausführung einer der Dienstlogika SL1 und SL2 für eine Verbindung aktiviert, so wird ein Prozeß gestartet, der das jeweilige Dienststeuerprogramm für diese Verbindung durchführt.

In der Steuerung der Dienstvermittlungsstelle SSP1 ist eine Dienstvermittlungsfunktion SSF implementiert. Die Dienstvermittlungsfunktion SSF erkennt bestimmte Trigger Ereignisse beim Aufbau einer Verbindung, die über die Dienstvermittlungsstelle SSP1 aufgebaut wird. Solche Trigger-Ereignisse können beispielsweise bestimmten gerufene Rufnummer (Verbindungsziel) oder bestimmte Eigenschaften des rufenden Teilnehmers (Verbindungsursprung) sein. Wird ein solches Ereignis beim Aufbau einer Verbindung von der Dienstvermittlungsfunktion SSF erkannt, so erzeugt sie eine Dienstanforderungsnachricht, sendet sie an den Dienst-Interaktions-Verwalter SIM und führt im daran anschließenden Dialog die an sie von dem Dienst-lnteraktions-Verwalter SIM gerichteten Befehle aus, die die weitere Bearbeitung der Verbindung betreffen. Solche Befehle bestehen beispielsweise in der Weiterleitung der Verbindung zu einer anderen Rufnummer oder der Anlage von Sprachansagen oder Spracherkennungssystemen, beispielsweise mittels des Dienstunterstützungssystem IP.

Der Dienst-Interaktions-Verwalter SIM weist eine Steuereinheit auf, die eine Dienst-Interaktions-Funktion SIF erbringt und von auf der Rechnerplattform des Dienst-Interaktions-Verwalters SIM aufsetzenden Applikationsprogrammen ausgeführt wird.

Die Dienst-Interaktions-Funktion SIF wird durch den Empfang einer Dienstanforderungsnachricht von einer der Dienstvermittlungsstellen SSP1 und SSP2 für eine Verbindung aktiviert und verwaltet im Folgenden die Ausführung sämtlicher für diese Verbindung zu erbringenden Dienste, ohne daß diese Dienste im Weiteren noch durch weitere Dienstanforderungsnachrichten von den Dienstvermittlungsstellen SSP1 und SSP2 einzeln aktiviert werden müssen. Pro Verbindung, für die Dienste zu erbringen sind, wird somit unabhängig von der Anzahl der zu erbringenden Dienste immer nur ein Dialog zwischen einer der Dienstvermittlungsstellen SSP1 und SSP2 und dem Dienst-Interaktions-Verwalter SIM geführt.

Es ist auch möglich, daß ein Ruf (call) mehr als eine Verbindung umfaßt. In diesem Fall ist es vorteilhaft, daß der Dienst-Interaktions-Verwalter SIM durch den Empfang der Dienstanforderungsnachricht gleich für den gesamten Ruf aktiviert wird und im Folgenden die Ausführung sämtlicher für diesen Ruf zu erbringenden Dienste verwaltet, ohne daß eine weitere Aktivierung notwendig ist. Pro Ruf wird somit nur ein Dialog zwischen einer Dienstvermittlungsstelle und dem Dienst-Interaktions-Verwalter geführt.

Sobald die Dienst-lnteraktions-Funktion SIF einmal für eine Verbindung durch den Empfang einer Dienstanforderungsnachricht aktiviert worden ist, ermittelt sie sämtliche Dienste, die für die Verbindung zu erbringen sind. Weiter steuert sie die Ausführung sämtlicher für die Verbindung ermittelter Dienste, indem sie an die den ermittelten Diensten zugeordneten Dienststeuereinheiten, beispielsweise an die Dienststeuereinheiten SCP1 und SCP2, Dienstanforderungsnachrichten sendet, die die Ausführung der den ermittelten Diensten zugeordneten jeweiligen dienstspezifischen Dienstlogika, beispielsweise die Dienstlogika SL1 und SL2, für die Verbindung aktivieren. Die von der Dienst-Interaktions-Funktion SIF für die Verbindung aktivierten Dienstlogika SL1 und SL2 interagieren zur Steuerung der Erbringung des jeweiligen Dienstes mit der Dienst-Interaktions-Funktion SIF, entsprechende Dialoge zwischen diesen Dienstlogika SL1 und SL2 und der Dienst-Interaktions-Funktion SIF werden durchgeführt. Die Dienst-lnteraktions-Funktion SIF verknüpft die Dialoge zwischen diesen aktivierten Dienstlogika SL1 und SL2 und der Dienst-Interaktions-Funktion SIF mit dem Dialog zwischen der Dienst-Interaktions-Funktion SIF und der Dienstvermittlungsfunktion SSF, die die Dienst-Interaktions-Funktion SIF für die Verbindung aktiviert hat. Sind alle Dienste für die Verbindung erbracht worden, beendet die Dienst-Interaktions-Funktion SIF den Dialog mit der Dienstvermittlungsfunktion SSF und die Dienst-lnteraktions-Funktion SIF wird für die Verbindung deaktiviert.

Der Teilnehmer A veranlaßt durch Senden einer Verbindungsanforderung mittels seines Endgerätes TE den Aufbau einer Verbindung durch das Telekommunikationsnetz TKN. In einem ersten Ausführungsbeispiel wird nun angenommen, daß für diese Verbindung zwei Dienste, nämlich ein OCS Dienst (OCS = Originating Call Screening) und ein Freephone Dienst durchgeführt werden müssen. Anhand dieses Ausführungsbeispiels wird die sequentielle Bearbeitung von Diensten durch die Dienst-lnteraktions-Funktion SIF beschrieben.

Beim Aufbau der Verbindung durch das Kommunikationsnetz TKN wird die Verbindung über die Dienstvermittlungsstelle SSP1 geleitet. Die Dienstvermittlungsfunktion SSF erkennt anhand der Verbindungsanforderung das Zutreffen eines Trigger-Ereignisses (OCS Dienst erforderlich) und sendet in einem ersten Schritt 1 eine Dienstanforderung (Anforderung des OCS Dienstes) an die Dienst-lnteraktions-Funktion SIF. Die Dienst-lnteraktions-Funktion SIF aktiviert daraufhin die Durchführung der Steuerung des OCS Dienstes, indem sie die für diesen Dienst zuständige Dienstlogik SL1 in einem Schritt 2 aktiviert. In einem Schritt 3 wird, nachdem der OCS Dienstes erbracht worden ist, der zugehörige Dialog zwischen Dienstelogik SL1 und Dienst-lnteraktions-Funktion SIF und die Durchführung des OCS Dienstes beendet. Der Dialog zwischen der Dienst-Interaktions-Funktion SIF und der Dienstvermittlungsfunktion SSF wird jedoch noch nicht beendet.

In einem nächsten Schritt ermittelt die Dienst-Interaktions-Funktion SIF, ob noch weitere Dienste für die Verbindung zu erbringen sind und ermittelt, daß als nächstes noch der Freephone Dienst für die Verbindung durchgeführt werden muß. In einem Schritten 4 aktiviert die Dienst-lnteraktions-Funktion SIF daraufhin die dem Freephone Dienst zugeordnete Dienstlogik SL1. In einem Schritt 5 wird der zugehörige Dialog nach Durchführung des Dienstes beendet und die Dienstlogik SL2 für die Verbindung deaktiviert. Die Dienst-Interaktions-Funktion SIF ermittelt, daß keine weiteren Dienste mehr für die Verbindung zu erbringen sind und beendet sodann in einem Schritt 6 den Dialog zwischen der Dienst-lnteraktions-Funktion SIF und der Dienstvermittlungsfunktion SSF. Somit erscheint es für die Dienstvermittlungsfunktion SSF, als wäre nur ein Dienst durchgeführt worden, der aus der Kombination des OCS und des Freephone-Dienstes besteht.

In einem zweiten Ausführungsbeispiel wird nun die parallel Bearbeitung von Diensten durch die Dienst-Interaktions-Funktion SIF beschrieben. Hierfür wird nun angenommen, daß für die Verbindung zwei Dienste, nämlich ein PC Dienst (PC =Prepayed Card) und ein PR Dienst (PR = Premium Rate) durchgeführt werden müssen.

Die Dienst-lnteraktions-Funktion SIF wird in dem Schritt 1 durch den Empfang einer Dienstanforderungsnachricht (Anforderung des OCS Dienstes) für die Verbindung aktiviert. Die Dienst-Interaktions-Funktion SIF ermittelt nun, daß für die Verbindung neben dem OCS Dienst noch ein weiterer Dienst, der PR Dienst erbracht werden muß. In den Schritten 2 und 4, die parallel ausgeführt werden, aktiviert sie nun parallel die diesen beiden Diensten zugeordneten Dienstlogika SL1 und SL2, wobei die Dienstlogik SL2 in diesem Ausführungsbeispiel den PR Dienst steuert. Während der parallel durch die Dienstlogika SL1 und SL2 ausgeführten Steuerung der beiden Dienste sorgt die Dienst-Interaktions-Funktion SIF für die richtige Zuordnung der zwischen den Dienstlogika SL1 und SL2 und der Dienst-lnteraktions-Funktion SIF einerseits und der zwischen der Dienstvermittlungsfunktion SSF und der Dienst-Interaktions-Funktion SIF andererseits ausgetauschten Nachrichten. Die Verbindung wird hierbei unter der Überwachung und Koordination der Dienst-Interaktions-Funktion SIF jeweils zu einem Zeitpunkt von der Dienstlogik SL1 und zu einem anderen Zeitpunkt von der Dienstlogik SL2 kontrolliert. Die beiden Dienste werden somit quasi parallel erbracht.

Ist die Durchführung der beiden Dienste abgeschlossen und der Dialog zwischen den Dienstlogika SL1 und SL2 und der Dienst-lnteraktions-Funktion SIF in den Schritten 3 bzw. 5 beendet, so wird in dem Schritt 6 auch der Dialog zwischen der Dienst-Interaktions-Funktion SIF und der Dienstvermittlungsfunktion SSF beendet und die Dienst-lnteraktions-Funktion SIF für die Verbindung deaktiviert. Auch hier erscheint es für die Dienstvermittlungsfunktion SSF, als wäre nur ein Dienst durchgeführt worden, der aus der Kombination des OCS und des PR Dienstes besteht.

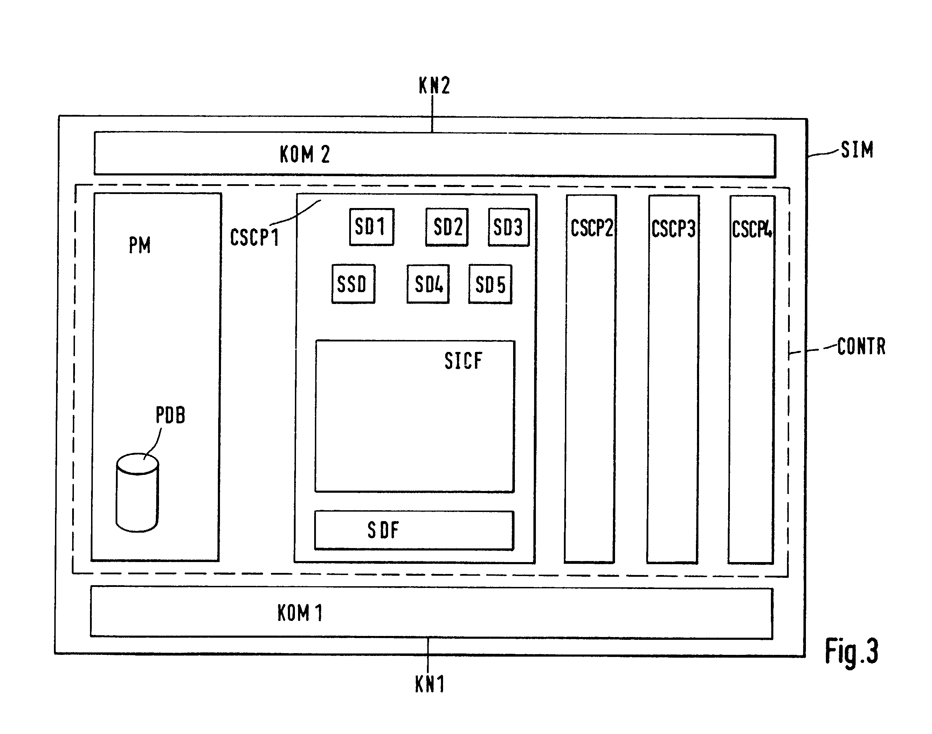

Anhand von Fig. 3 wird nun der detaillierte Aufbau des Dienst-Interaktions-Verwalters SIM erläutert.

Fig. 1 zeigt den Dienst-Interaktions-Verwalters SIM, der mit den Kommunikationsnetzen KN1 und KN2 verbunden ist. Der Dienst-Interaktions-Verwalters SIM weist zwei Kommunikationseinheiten KOM1 und KOM2 und eine Steuereinheit CONTR auf.

Die Kommunikationseinheit KOM1 führt Funktionen durch, die eine Interaktion mit den Dienstvermittlungsfunktionen der Dienstvermittlungsstellen SSP1 und SSP2 und insbesonders einen Empfang und eine Interpretation der von diesen Dienstvermittlungsfunktionen stammenden Dienstanforderungsnachrichten ermöglicht. Diese Funktionen umfassen Funktionen zur Bearbeitung der in dem Kommunikationsnetz KN1 verwendeten Transportprotokolle, beispielsweise der Transportprotokolle des Signalisierungssystems Nr. 7. Auf diesen Funktionen setzen Funktionen auf, die das TCAP Protokoll des ITU-T Signalisierungssystem Nr. 7 und das darauf aufsetzende INAP Protokoll (TCAP = Transport Capabilities Application Part, INAP = Intelligent Network Applications Protocol) bearbeiten, mittels dem Dienstvermittlungsfunktionen und Dienststeuerfunktionen gemäß der IN-Architektur interagieren. Die im Rahmen dieses Protokolls ausgetauschten IN-Applikationsnachrichten (INAP Nachrichten) sowie die grundlegend Dienste und Aktionen dieses Protokolls werden beispielsweise in der Empfehlung ITU-T Q.1219, Kapitel 6.5. Intelligent Network Applications Protokoll, Seite 26 bis 40 und detaillierter in der Empfehlung ITU-T Q.1219 für IN CS-1 erläutert.

Die Kommunikationseinheit KOM1 führt Funktionen durch, die eine Interaktion mit den Dienststeuereinheiten SCP1 bis SCP3 ermöglicht. Diese Funktionen umfassen Funktionen zur Bearbeitung der in dem Kommunikationsnetz KN2 verwendeten Transportprotokolle, bei denen es sich um üblicherweise für die Kommunikation in LAN Rechnernetzen verwendeten Protokollen, beispielsweise Ethernet-, Fast-Ethernet-, FDDI-oder Token-Protokolle handelt. Auf diesen Funktionen setzen beispielsweise Funktionen zur Bearbeitung des IP Protokolls und des TCP Protokoll (IP = Internet Protokoll, TCP = Transport Control Protocol) auf, auf denen wiederum Funktionen zur Bearbeitung des TCAP Protokolls und des INAP Protokolls aufsetzen.

Die Steuereinheit CONTR wird von auf der Rechnerplattform des Dienst-Interaktions-Verwalters SIM ausgeführten Applikationsprogrammen gebildet. Die Steuereinheit CONTR weist aus funktioneller Sicht einen Prozeßverwalter PM und beispielsweise vier Prozesse CSCP1 bis CSCP4 auf.

Die Prozesse CSCP1 bis CSCP4 stellen jeweils die für eine spezielle Verbindung aktivierte Dienst-Interaktions-Funktion dar. Im Augenblick verwaltet die Steuereinheit CONTR somit gerade parallel die Erbringung der Dienste für vier verschiedenen Verbindungen des Telekommunikationsnetzes TKN.

Der Prozeßverwalter PM verwaltet die Prozeß CSCP1 bis CSCP4 und ordnet die über die Kommunikationseinheiten KOM1 und KOM2 ankommenden Nachrichten dem richtigen Prozeß der Prozesse CSCP1 bis CSCP4 zu. Zur Erfüllung dieser Funktionen verfügt der Prozeßverwalter PM über eine Prozeßdatenbank PDB. Empfängt der Prozeßverwalter PM von einer der Dienstvermittlungsstellen SSP1 bis SSP2 eine Dienstanforderungsnachricht für eine Verbindung, für die noch keine Dienst-Interaktions-Funktion aktiviert ist und für die somit noch kein den Prozessen CSCP1 bis CSCP4 entsprechender Prozeß existiert, so erzeugt sie einen solchen Prozeß, wodurch eine Dienst-Interaktions-Funktion für diese Verbindung aktiviert wird. Umgekehrt wird beim Deaktivieren einer Dienst-Interaktions-Funktion der entsprechende Prozeß gelöscht.

Die von den Prozessen CSCP1 bis CSCP4 erbrachten Funktionen werden nun beispielhaft anhand des Prozesses CSCP1 erläutert.

Der Prozeß CSCP1 weist acht Funktionen SD1 bis SD5, SSD, SICF und SDF auf.

Die Funktion SSD verwalten den Dialog zwischen der von dem Prozeß CSCP1 erbrachte Dienst-Interaktions-Funktion mit der Dienstvermittlungsfunktion, die diese Dienst-Interaktions-Funktion für die Verbindung aktiviert hat.

Die Funktionen SD1 und SD5 verwalten jeweils einen Dialog mit einer Dienstlogik. Die von dem Prozeß CSCP1 erbrachte Dienst-lnteraktions-Funktion führt somit in diesem Beispiel augenblicklich parallel fünf Dialoge mit fünf verschiedenen Dienstlogika.

Die Funktion SDF ermittelt die Dienste, die für die Verbindung zu erbringen sind, für die von dem Prozeß CSCP1 erbrachte Dienst-Interaktions-Funktion aktiviert worden ist.

Die Funktion SDF ermittelt diese Dienste zum einen aus der Dienstanforderungsnachricht, die diese Dienst-Interaktions-Funktion aktiviert hat. In dieser Dienstanforderungsnachricht ist bereits eine Dienstkennung eingetragen, die den Dienst spezifiziert, der gemäß der Zuordnung in der Dienstvermittlungsfunktion dem Trigger-Ereignis zugeordnet ist, das das Erzeugen der Dienstanforderungsnachricht verursacht hat.

Zum anderen ermittelt die Funktion SDF diese Dienste basierend auf Verbindungsdaten der Verbindung, für die diese Dienst-lnteraktions-Funktion die Dienststeuerung durchführt. Solche Verbindungsdaten sind beispielsweise die Rufnummer des gerufenen Teilnehmers, die Rufnummer des rufenden Teilnehmers oder auch Eigenschaften oder IN spezifischer Daten des rufenden oder gerufenen Teilnehmers. Die Funktion SDF enthält somit Funktionalitäten, die auch in einer Dienstvermittlungsfunktion gemäß der IN Architektur vorhanden sind.

Die Funktion SICF steuert den Ablauf der für die Verbindung zu erbringenden Dienstsequenzen. Sie ermittelt hierfür mittels der Funktion SDF sequentiell oder parallel sämtliche für die Verbindung zu erbringenden Dienste, setzt die Reihenfolge der Dienstermittlung und Dienstaktivierung fest und führt bei der Aktivierung einer Dienstlogik die Adressierung der korrekten Dienstlogik und Dienststeuereinheit durch. Sowohl die Ermittlung der für die Verbindung zu erbringenden Dienste als auch die Aktivierung der zugeordneten Dienstlogik kann hierbei parallel oder sequentiell erfolgen.

Die Funktion SICF enthält hierfür Dienst-Interaktions-Logikprogramme, die jeweils für einen vorgegebenen Satz von Diensten diesen Ablauf definieren.

Eine weitere Möglichkeit besteht darin, daß die Funktion SICF einen Satz von Regeln enthält, die ihr je nach Art der ermittelten Dienste eine parallele oder eine sequentielle Ausführung aller ermittelter Dienste oder eine parallele oder sequentielle Ausführung von Untergruppen der ermittelten Dienste vorschreibt.

Weiter kann die Funktion SICF über Funktionen verfügen, die die für eine Verbindung ermittelten Dienst daraufhin überwachen, ob es sich um eine erlaubte Dienstsequenz handelt oder nicht.

## Patentansprüche

1. Verfahren zum Bereitstellen von Diensten in einem Telekommunikationsnetz (TKN), wobei bei dem Verfahren beim Aufbau einer Verbindung, für die ein oder mehrere Dienste zu erbringen sind, eine Dienstvermittlungsfunktion (SSF) einer Dienstvermittlungsstelle (SSP1, SSP2) getriggert wird und die Erbringung der für die Verbindung zu erbringenden Dienste jeweils von einer dem jeweiligen zu erbringenden Dienst zugeordneten dienstspezifischen Dienstlogik (SL1, SL2) einer Dienststeuereinheit (SCP1 bis SCP3) gesteuert wird,
**dadurch gekennzeichnet**, daß beim Triggern der Dienstvermittlungsfunktion (SSF) von der Dienstvermittlungsfunktion erzeugte Dienstanforderungsnachrichten von der Dienstvermittlungsstelle (SSP1 ) an einen Dienst-Interaktions-Verwalter (SIM) geleitet werden, daß der Dienst-lnteraktions-Verwalter (SIM), wenn er für die Verbindung einmal durch den Empfang einer Dienstanforderungsnachricht aktiviert worden ist, sämtliche Dienste ermittelt, die für die Verbindung zu erbringen sind, und daß der Dienst-Interaktions-Verwalter (SIM) die Ausführung sämtlicher für die Verbindung ermittelter Dienste steuert, indem der Dienst-Interaktions-Verwalter (SIM) an die den ermittelten Diensten zugeordneten Dienststeuereinheiten (SCP1, SCP2) Dienstanforderungsnachrichten sendet, die die Ausführung der den ermittelten Diensten zugeordneten jeweiligen dienstspezifischen Dienstlogika (SL1, SL2) für die Verbindung aktivieren, und die aktivierten Dienstlogika (SL1, SL2) zur Steuerung der Erbringung des jeweiligen Dienstes mit dem Dienst-Interaktions-Verwalter (SIM) interagieren.

2. Verfahren nach Anspruch 1, dadurch gekennzeichnet, daß der Dienst-lnteraktions-verwalter (SIM) eine parallele Ausführung von für die Verbindung ermittelten Diensten veranlaßt, indem er die Ausführung der diesen Diensten zugeordneten Dienstlogika (SL1, SL2) parallel aktiviert.

3. Verfahren nach Anspruch 1, dadurch gekennzeichnet, daß der Dienst-lnteraktions-verwalter (SIM) eine sequentielle Ausführung von für die Verbindung ermittelten Diensten veranlaßt, indem er die Ausführung der diesen Diensten zugeordneten Dienstlogika (SL1, SL2) sequentiell aktiviert.

4. Verfahren nach Anspruch 1, dadurch gekennzeichnet, daß der Dienst-lnteraktions-verwalter (SIM) je nach Art der ermittelten Dienste eine parallele oder eine sequentielle Ausführung von ermittelten Diensten veranlaßt.

5. Verfahren nach Anspruch 1, dadurch gekennzeichnet, daß der Dienst-lnteraktions-verwalter (SIM) überwacht, daß nur erlaubte Dienstsequenzen ausgeführt werden.

6. Verfahren nach Anspruch 1, dadurch gekennzeichnet, daß der Dienst-Interaktions-Verwalter (SIM) pro Verbindung, für die Dienste zu Erbringen sind, einen Dialog mit der Dienstvermittlungsstelle (SSP1) führt und diesen Dialog erst beendet, nachdem alle Dienste für die Verbindung erbracht worden sind.

7. Verfahren nach Anspruch 1, dadurch gekennzeichnet, daß der Dienst-lnteraktions-verwalter (SIM) die Dialoge zwischen den Dienstlogika (SL1) und dem Dienst-lnteraktions-Verwalter (SIM) mit dem Dialog zwischen dem Dienst-Interaktions-Verwalter (SIM) und der Dienstvermittlungsstelle (SSP1) verknüpft.

8. Verfahren nach Anspruch 1, dadurch gekennzeichnet, daß der Dienst-lnteraktions-verwalter (SIM) mit der Dienstvermittlungsstelle (SSP1, SSP2) über das Signalisierungsnetz (KN1) des Telekommunikationsnetzes (TKN) kommuniziert.

9. Verfahren nach Anspruch 1, dadurch gekennzeichnet, daß der Dienst-Interaktions-Verwalter (SIM) mit den Dienststeuereinheiten (SCP1 bis SCP3) über ein Rechnernetz (KN2) kommuniziert.

10. Verfahren nach Anspruch 1, dadurch gekennzeichnet, daß der Dienst-lnteraktions-verwalter (SIM), wenn er für die Verbindung einmal durch den Empfang einer Dienstanforderungsnachricht aktiviert worden ist, sämtliche Dienste ermittelt, die für den Ruf zu erbringen sind, dem die Verbindung zugeordnet ist, und daß der Dienst-lnteraktions-Verwalter (SIM) die Ausführung sämtlicher für diesen Ruf ermittelter Dienste steuert.

11. Dienst-lnteraktions-Verwalter (SIM) zur Unterstützung der Bereitstellung von Diensten in einem Telekommunikationsnetz (TKN) ,
**dadurch gekennzeichnet**, daß der Dienst-Interaktions-Verwalter (SIM) mit einer ersten Kommunikationseinheit (KOM1) zum Empfang von Dienstanforderungsnachrichten versehen ist, die von einer beim Aufbau einer Verbindung, für die ein oder mehrere Dienste zu erbringen sind, getriggerten Dienstvermittlungsfunktion (SSF) einer Dienstvermittlungsstelle (SSP1, SSP2) erzeugt werden, daß der Dienst-lnteraktions-verwalter (SIM) mit einer zweiten Kommunikationseinheit (KOM2) zur Interaktion mit Dienststeuereinheiten (SCP1 bis SCP3) versehen ist, die über dienstspezifischen Dienstlogika (SL1, SL2) zur jeweiligen Steuerung der Erbringung eines Dienstes verfügen, daß der Dienst-lnteraktions-verwalter (SIM) mit einer Steuereinheit (CONTR) versehen ist, die so ausgestaltete ist, daß sie, wenn sie einmal für eine Verbindung durch den Empfang einer Dienstanforderungsnachricht aktiviert worden ist, sämtliche Dienste ermittelt, die für die Verbindung zu erbringen sind, und daß die Steuereinheit (CONTR) weiter so ausgestaltet ist, daß sie die Ausführung sämtlicher für die Verbindung ermittelter Dienste steuert, indem sie mittels der zweiten-Kommunikationseinheit (KOM2) an die den ermittelten Diensten zugeordneten Dienststeuereinheiten (SCP1, SCP2) Dienstanforderungsnachrichten sendet, die die Ausführung der den ermittelten Diensten zugeordneten jeweiligen dienstspezifischen Dienstlogika (SL1, SL2) für die Verbindung aktivieren, und sie die aktivierten Dienstlogika (SL1, SL2) veranlaßt, zur Steuerung der Erbringung des jeweiligen Dienstes mit ihr mittels der zweiten Kommunikationseinheit (KOM2) zu interagieren.

12. Dienststeuerplattform (MSP) zur der Bereitstellung von Diensten in einem Telekommunikationsnetz (TKN) ,wobei die Dienststeuerplattform (MSP) mit ein oder mehreren Dienststeuereinheiten (SCP1 bis SCP3) versehen ist, die über dienstspezifische Dienstlogika (SL1, SL2) zur jeweiligen Steuerung der Erbringung eines Dienstes verfügen,
**dadurch gekennzeichnet**, daß die Dienststeuerplattform (MSP) mit einem Dienst-Interaktions-Verwalter (SIM) versehen ist, daß der Dienst-lnteraktions-Verwalter (SIM) mit einer ersten Kommunikationseinheit (KOM1) zum Empfang von Dienstanforderungsnachrichten versehen ist, die von einer beim Aufbau einer Verbindung, für die ein oder mehrere Dienste zu erbringen sind, getriggerten Dienstvermittlungsfunktion (SSF) einer Dienstvermittlungsstelle (SSP1, SSP2) erzeugt werden, daß der Dienst-lnteraktions-verwalter (SIM) mit einer zweiten Kommunikationseinheit (KOM2) zur Interaktion mit den Dienststeuereinheiten (SCP1 bis SCP3) versehen ist, daß der Dienst-Interaktions-Verwalter (SIM) mit einer Steuereinheit (CONTR) versehen ist, die so ausgestaltete ist, daß sie, wenn sie einmal für eine Verbindung durch den Empfang einer Dienstanforderungsnachricht aktiviert worden ist, sämtliche Dienste ermittelt, die für die Verbindung zu erbringen sind, und daß die Steuereinheit (CONTR) weiter so ausgestaltet ist, daß sie die Ausführung sämtlicher für die Verbindung ermittelter Dienste steuert, indem sie mittels der zweiten Kommunikationseinheit (KOM2) an die den ermittelten Diensten zugeordneten Dienststeuereinheiten (SCP1, SCP2) Dienstanforderungsnachrichten sendet, die die Ausführung der den ermittelten Diensten zugeordneten jeweiligen dienstspezifischen Dienstlogika (SL1, SL2) für die Verbindung aktivieren, und sie die aktivierten Dienstlogika veranlaßt, zur Steuerung der Erbringung des jeweiligen Dienstes mit ihr mittels der zweiten Kommunikationseinheit (KOM2) zu interagieren.
